# NEUE EUROPÄISCHE PATENTSCHRIFT

(11) **EP 1 664 355 B2**
(45) Veröffentlichungstag und Bekanntmachung des Hinweises auf die Entscheidung über den Einspruch: **18.10.2017**
(45) Hinweis auf die Patenterteilung: 30.03.2011
(21) Anmeldenummer: 04764498.4
(22) Anmeldetag: 26.08.2004
(51) Int. Cl.: C21C 5/38, F28D 17/00, F27D 17/00, B01D 39/00, B01D 46/00

(54) **VERFAHREN ZUM SAMMELN UND BEHANDELN VON REAKTIONSGASEN AUS EINER ERZEUGUNGASANLAGE FÜR SCHMELZFLÜSSIGE METALLE UND ENTSTAUBUNGSANLAGE HIERZU**
METHOD FOR COLLECTING AND TREATING REACTION GASES FROM A PRODUCTION PLANT FOR MOLTEN METAL AND DUST-REMOVING MACHINE THEREFOR
PROCEDE POUR ACCUMULER ET TRAITER DES GAZ REACTIONNELS ISSUS D'UNE INSTALLATION DE PRODUCTION POUR METAUX EN FUSION, ET INSTALLATION DE DEPOUSSIERAGE A CET EFFET

(30) Priorität: 23.09.2003 AT 15032003
(43) Veröffentlichungstag der Anmeldung: 07.06.2006
(73) Patentinhaber: Primetals Technologies Austria GmbH, 4031 Linz (AT)
(72) Erfinder: HAMPEL, Alfred, A-4040 Linz (AT); ENGELMANN, Anton, A-4115 Kleinzell (AT)
(74) Vertreter: Metals@Linz
(86) Internationale Anmeldenummer: PCT/EP2004/009522
(87) Internationale Veröffentlichungsnummer: WO 2005/035797

(56) Entgegenhaltungen:
- DE-A1- 1 551 813
- DE-A1- 2 239 578
- DE-B- 1 039 084
- DE-T2- 60 202 217
- FR-A- 1 350 871
- FR-A- 1 477 725
- GB-A- 872 088
- GB-A- 972 720
- GB-A- 996 332
- JP-A- S58 202 016
- US-A- 3 183 960
- US-A- 3 224 841
- US-A- 3 395 512
- BRANDES H.R. ET AL: 'Gas cleaning and secondary emissions control with energy recovery: Part I-Basic osygen converters; Part II-Electric arc furnaces.' IRON AND STEEL ENGINEER Januar 1992, Seiten 49 - 55
- Helmuth Ester, Heiner Brandes "Secondary fume emission control", Mannesmann Demag Hüttentechnik, Vortrag gehalten am 23. September auf der "1993 Iron and Steel Exposition and AISE Annual Convention return to Pittsburgh, September 20-23, in der "9:00 am - Environmental session"
- Iron and Steel Engineer, July 1993, volume 70, No. 7, Seite 70 und 115, 116 zum Nachweis des gehaltenen Vortrages

## Beschreibung

Die Erfindung betrifft ein Verfahren zum Sammeln und Behandeln von Reaktionsgasen aus Erzeugungsanlagen für schmelzflüssige Metalle, wobei metallhaltige Einsatzstoffe in fester oder flüssiger Form in ein metallurgisches Gefäß eingebracht und unter Einwirkung von Brennstoffen und Reaktionsstoffen umgesetzt werden und die das metallurgische Gefäß verlassenden heißen, gasförmigen und staubbeladenen Reaktionsgase teilweise einem Primärentstaubungsprozess und teilweise einem Sekundärentstaubungsprozess in zugeordneten Staubabscheideeinrichtungen zugeführt werden, sowie eine Entstaubungsanlage hierfür.

In einem Primärentstaubungsprozess werden die während eines kontinuierlichen Metallerzeugungsprozesses entstehenden Reaktionsgase gekühlt und entstaubt, während in einem Sekundärentstaubungsprozess vorzugsweise die während der Chargierung von Schrott und Roheisen aufsteigenden Reaktionsgase weiter behandelt werden.

Im Detail betrifft die Erfindung ein Verfahren zum Behandeln von Reaktionsgasen aus Stahlerzeugungsanlagen und die hierfür notwendigen Entstaubungsanlagen, wobei eisenhältige Einsatzstoffe, wie beispielsweise Roheisen, Schrott, Eisenerz etc., in fester oder flüssiger Form in einen Stahlerzeugungskonverter, einen Lichtbogenofen, einen Kupolofen oder in ein artverwandtes metallurgisches Gefäß eingebracht und unter der Einwirkung von Brennstoffen und Reaktionsstoffen, wie Kohle, Sauerstoff, Erdgas, diversen Schlackenbildnern und Legierungszusätzen, Stahl erzeugt wird. Die während des Erzeugungsprozesses in großer Menge anfallenden Reaktionsgase werden direkt aus dem metallurgischen Gefäß abgeleitet oder oberhalb des metallurgischen Gefäßes weitgehend abgesaugt und in einem Primär- und einem Sekundärentstaubungsprozess weiter behandelt, wobei eine weitgehende Entstaubung der Reaktionsgase erfolgt, bevor diese Reaktionsgase einer Verbrennung (Abfackelung) oder Speicherung (bei ausreichendem Brennwert der Reaktionsgase) zugeführt werden.

Aus der US-A 4,050,682 und der DE-C 22 39 578 sind bereits ein derartiges Verfahren und eine dementsprechende Vorrichtung zur Sammlung und Behandlung von Reaktionsgasen aus einem Stahlerzeugungskonverter bekannt. Die Reaktionsgase aus dem Konverter werden einerseits während des laufenden Produktionsprozesses in eine Primärentstaubungsanlage übergeleitet und dort weiter behandelt und andererseits während der Chargierphase, bei der der Konverter eine geneigte Position einnimmt, in eine Sekundärentstaubungsanlage abgeleitet und dort einer weiteren Behandlung zugeführt. In der Primärentstaubungsanlage werden die kontinuierlich und im Wesentlichen in weitgehend vorbestimmbaren, von den Einsatzstoffen abhängigen Mengen anfallenden Reaktionsgase in einer gekühlten, den Konvertermund weitgehend abdeckenden Absaughaube gesammelt und in einem mehrstufigen, zumeist zweistufigen, Entstaubungsprozess in Wäschern, vorzugsweise Venturiwäschern, von der Staubbeladung befreit und gekühlt und anschließend einer Verbrennung in einer Fackel zugeführt. Während der Chargierung von Einsatzstoffen, insbesondere bei der Chargierung von Schrott, kommt es einerseits zu einer erhöhten Staubbelastung und andererseits zu plötzlichen Verbrennungsprozesses der mit dem Stahlschrott chargierten Verunreinigungen, wie Lacke, Öle, Kunststoffe, etc. Die hierbei entstehenden Reaktionsgase aus dem geneigten Konvertergefäß werden in einer im Abstand oberhalb des Konverters angeordneten weiteren Absaughaube einer Sekundärentstaubungsanlage gesammelt und von dort einer Weiterbehandlung zugeführt. Dieser während der kurzen Chargierzeiten bei gekipptem Konvertergefäß anfallende Reaktionsgasstrom wird ebenfalls einem Wäscher zugeführt, wobei der für den Reaktionsgastransport vorgesehene Strömungskanal zwischen dem ersten und dem zweiten Wäscher der Primärentstaubungsanlagen in diese einmündet. Aus der DE-C 22 39 578 ist es weiters bekannt die gereinigten und gekühlten Reaktionsgase einem Gasspeicher zuzuführen und diese als Nutzgase einer weiteren Verwendung zuzuführen.

Primärentstaubungsanlagen mit feuerfesten Ausmauerungsmaterialien für Abgase sind in den Dokumenten US3395512A, US3183960A und FR1477725A gezeigt.

Wenn das metallurgische Gefäß zur Erzeugung schmelzflüssiger Metalle von einem Elektrolichtbogenofen gebildet ist, werden Reaktionsgase während des laufenden Einschmelzprozesses üblicherweise über ein Deckelloch des Ofengefäßes abgesaugt und einer Primärentstaubungsanlage zugeführt. Während der Chargierung von Einsatzstoffen in den Lichtbogenofen, welche vorwiegend aus Schrott, direkt reduziertem Eisen und heiß brikettiertem Eisen bestehen, ist der Ofendeckel üblicherweise ausgeschwenkt und aufsteigende Reaktionsgase werden von einer so genannten "Canopy-Haube" aufgefangen und einer Sekundärentstaubungsanlage zugeführt. Die Entstaubungsanlagen sind analog zu den bei Konvertergefäßen eingesetzten aufgebaut.

Entstaubungsanlagen, wie sie beispielsweise aus der US-A 4,050,682 bekannt sind, sind jedoch den heutigen Anforderungen, insbesondere hinsichtlich der Chargierung von Stahlschrott in schlechter Qualität infolge einer hohen Verunreinigungsrate, nicht gewachsen. Mit der Forderung nach einem umfassenden Recycling von Automobilen und Haushaltsschrott (Haushaltsgeräte) ist der Schrott in beträchtlichen Mengen mit einen hohen Anteil an Kohlenwasserstoffen aufweisenden Begleitstoffen, wie Kunststoffe, Lacke, sonstigen organischen Stoffen, Öle, etc., sowie Aluminium und Zink versehen, durch die bei der Verbrennung große Wärmemengen freigesetzt werden. Dieser belastete Schrott weist zusätzlich einen hohen Feuchtegrad (Wasser, Schnee) auf. Dieser Schrott wird beim Chargieren direkt mit flüssigem Metall in Kontakt gebracht, wobei dies bei einem Elektrolichtbogenofen durch korbweises Chargieren auf ein flüssiges Schmelzenbad und bei einem Blasekonverter entweder durch Chargieren von Flüssigmetall auf eine Schrottvorlage oder durch Chargieren von Schrott in ein vorhandenes Schmelzenbad erfolgt. Durch die plötzliche Hitzeeinwirkung in sehr kurzer Zeit entstehen Zerfallsprodukte, wie CO, H₂, CH₄ oder ähnliche Produkte und Verbrennungsgase, die aus dem metallurgischen Gefäß austreten und mit der Umgebungsluft gemischt werden. Der Anteil dieser Zerfallsprodukte und die Temperatur in der Umgebung des metallurgischen Gefäßes sind hoch genug, um eine unmittelbare Verbrennung dieser Zerfallsprodukte einzuleiten und eine beträchtliche Menge von Reaktionsgasen und eine bedeutende Hitzeentwicklung in diesem Bereich zu entwickeln. Das Sekundärentstaubungssystem, insbesondere die Canopy-Haube des Lichtbogenofens, und die Sekundär-Absaughaube eines Stahlerzeugungskonverters sind auf die weitestgehende Sammlung und Ableitung dieser Reaktionsgase ausgelegt, um Hitzestaus im Stahlwerksgebäude und Verschmutzungen in und außerhalb dieses Bereiches zu vermeiden.

Im Sekundärentstaubungssystem sind zur Gasreinigung Staubabscheideeinrichtungen (Staubfilter) angeordnet, für die aufgrund ihrer Bauart die Gaseintrittstemperatur von 130°c bis 160°C nicht überschritten werden sollte. Viele Stahlerzeuger und Hersteller von Nichteisenmetallen haben in den vergangenen Jahren ihre Schrotteinsatzrate wesentlich erhöht, wobei insbesondere der Anteil an mit brennbaren Stoffen kontaminierten Schrott stark angestiegen ist. Diese Umstände führen zu wesentlich erhöhten Energieemissionen aus den metallurgischen Gefäßen während des Chargierens von Schrott auf Flüssigstahl bzw. umgekehrt. Die überhitzten Reaktionsgase können während der kurzen Transportzeit zu den Staubabscheideeinrichtungen nicht ausreichend gekühlt werden und verursachen Überhitzungsschäden an den Filtereinrichtungen. Die Beimischung von Kühlluft, vorwiegend Umgebungsluft, ist beschränkt, da kurzzeitig hohe Reaktionsgasmengen entsprechend hohe Mengen an Kühlluft erfordern, die wiederum eine unwirtschaftliche Überdimensionierung der Filteranlagen erzwingen.

Weiters kann die kurzzeitig anfallende große Gasmenge zu einer unvollständigen Verbrennung von Zerfallsprodukten der Schrottbegleiter infolge von Sauerstoffmangel und zum Ansaugen von unvollständig verbrannten Reaktionsgasen in das Leitungssystem der Sekundärentstaubungsanlage führen. Kommt es in diesem Leitungssystem dann zum Eintritt von Umgebungsluft, insbesondere im Fall einer Eindüsung von Kühlluft, vor dem Eintritt in die Staubabscheideeinrichtung, so können explosionsartige Verpuffungen auftreten, die zur Zerstörung insbesondere der Filtereinrichtungen führen.

Aufgabe der vorliegenden Erfindung ist es daher, die Nachteile des bekannten Standes der Technik zu vermeiden und ein Verfahren und eine Entstaubungsanlage für Reaktionsgase aus einer Erzeugungsanlage für schmelzflüssige Metalle vorzuschlagen, durch welche kurzfristig anfallende, große und heiße Reaktionsgasmengen mit möglichst klein dimensionierten Anlagen sicher entstaubt werden können. Weiters sollen bestehende Entstaubungsanlagen für die Aufnahme von kurzfristig anfallenden, hohen Reaktionsgasmengen vorbereitet werden.

Diese Aufgabe wird bei einem Verfahren der eingangs beschriebenen Art erfindungsgemäß bei einem Verfahren zum Betrieb einer Entstaubungsanlage gemäß Anspruch 9 zum Sammeln und Behandeln von Reaktionsgasen aus einer Erzeugungsanlage für schmelzflüssige Metalle, wobei metallhaltige Einsatzstoffe in fester oder flüssiger Form in ein metallurgisches Gefäß eingebracht und unter Einwirkung von Brennstoffen und Reaktionsstoffen umgesetzt werden und die das metallurgische Gefäß verlassenden heißen, gasförmigen und staubbeladenen Reaktionsgase teilweise einem Primärentstaubungsprozess und teilweise einem Sekundärentstaubungsprozess in zugeordneten Staubabscheideeinrichtungen zugeführt werden, gelöst. Die Lösung ist dadurch gekennzeichnet, dass die dem Sekundärentstaubungsprozess zugeführten Reaktionsgase vor dem Sekundärentstaubungsprozess einen Wärmespeicher durchströmen und von Reaktionsgasen mit einer Reaktionsgas-Temperatur, die über der Wandtemperatur der Speicherelemente aus Metall liegt, Wärme an den Wärmespeicher abgegeben wird und diese gespeicherte Wärme an nachfolgende Reaktionsgase mit einer Reaktionsgas-Temperatur, die unter der Wandtemperatur der Speicherelemente aus Metall liegt, wieder abgegeben wird.
Der Wärmespeicher arbeitet damit nach einem Regenerativprinzip, welches nur eine kurzzeitige Wärmespeicherung während und kurz nach der Schrottchargierung vorsieht. Dadurch wird, insbesondere in Relation zu einem Wärmetauscherprinzip, eine Investitionskosten sparende Verfahrensweise ermöglicht.
Die den Wärmespeicher durchströmenden Reaktionsgase umfassen gegebenenfalls auch Luft aus dem Umgebungsbereich des metallurgischen Gefäßes.

Zweckmäßig ist der Wärmespeicher so dimensioniert, dass 20 bis 70%, vorzugsweise 25 bis 50%, der von den Reaktionsgasen transportierten Wärmemenge im Wärmespeicher gespeichert und von ihm nachfolgend wieder abgegeben wird.

Ein sicherer Schutz gegen Überhitzung in den Staubfiltern ist gegeben, wenn durch die von den Reaktionsgasen an die Speicherelemente abgegebene Wärme die Temperatur der Reaktionsgase auf eine Staubfilter-Eingangstemperatur von vorzugsweise weniger als 180°C abgesenkt wird. Dieses Temperaturniveau entspricht der Verträglichkeit von Schlauchfiltern und konventionellem Filtertuch unter kurzzeitiger Temperaturbelastung.

Ein sicherer Schutz gegen Überhitzung in den Staubfiltern kann auch dadurch erreicht werden, dass den Reaktionsgasen nach dem Durchströmen des Wärmespeichers und vor dem Eintritt in die Staubabscheideeinrichtung zusätzlich ein Kühlgas zugeführt und die Temperatur der Reaktionsgase auf eine Staubfilter-Eingangstemperatur von vorzugsweise weniger als 180°C abgesenkt wird. Durch die kombinierte Anwendung einer Reaktionsgaskühlung durch Wärmespeicherung in einem regenerativen Wärmespeicher und durch Kühlung mit Kühlgas ist im besonderen Maße eine Optimierung der Sekundärentstaubungsanlage in ihrer Gesamtheit möglich.

Vorzugsweise werden die Reaktionsgase auf eine Staubfilter-Eingangstemperatur in einem Temperaturbereich zwischen 130°C und 160°C abgesenkt. Durch die solcherart erreichte Temperaturabsenkung der Reaktionsgase auf eine entsprechend niedrige Staubfilter-Eingangstemperatur werden explosionsartige Nachverbrennungen im Staubfilter vermieden.

Eine optimalen Festlegung der benötigten Kühlgasmengen wird dadurch erreicht, dass der Istwert der Staubfilter-Eingangstemperatur kontinuierlich gemessen und die Menge des dem Reaktionsgas zugemischten Kühlgasen in Abhängigkeit davon geregelt wird.

Weiters wird vorgeschlagen eine Entstaubungsanlage zum Sammeln und Behandeln von Reaktionsgasen aus einer Erzeugungsanlage für schmelzflüssige Metalle, wobei die Erzeugungsanlage ein metallurgisches Gefäß für die Aufnahme metallhaltiger Einsatzstoffe in fester oder flüssiger Form und deren Umsetzung unter Einwirkung von Brennstoffen und Reaktionsstoffen umfasst und dem metallurgischen Gefäß eine Primärentstaubungsanlage und einer Sekundärentstaubungsanlage für die das metallurgische Gefäß verlassenden heißen, gasförmigen und staubbeladenen Reaktionsgase zugeordnet sind, die mindestens eine Absaughaube, einen Strömungskanal und eine Staubabscheideeinrichtung umfassen, die dadurch gekennzeichnet ist, dass im Strömungskanal der Sekundärentstaubungsanlage ein Wärmespeicher zur Aufnahme von Wärme aus dem durchströmenden Reaktionsgas und zur Abgabe von Wärme an das durchströmende Reaktionsgas angeordnet ist, wobei der Wärmespeicher Speicherelemente aus Metall aufweist, und wobei die Speicherelemente des Wärmespeichers von parallel zueinander angeordneten Speicherplatten gebildet sind,
und zwischen benachbarten Speicherelementen Strömungskanäle angeordnet sind.

Der Wärmespeicher ist auf eine Kühlkapazität ausgelegt, die es ermöglicht, die anfallenden Reaktionsgasmengen auch bei schlechter Schrottqualität bis zum Eintritt in den Staubfilter auf eine ausreichend tiefe Staubfilter-Eingangstemperatur abzusenken.

Um kurzfristig eine große Wärmemenge speichern zu können, kann der Wärmespeicher eine Vielzahl von Speicherelementen umfassen, wobei zwischen benachbarten Speicherelementen Strömungskanäle für die Durchleitung der Reaktionsgase angeordnet sind.

Erfindungsgemäß sind die Speicherelemente des Wärmespeichers von parallel zueinander angeordneten Speicherplatten gebildet. Durch ein weitgehend geradlinige Strömungsrichtung der Reaktionsgase im Wärmespeicher ist der Strömungswiderstand der Speicherelemente auf eine mögliches Minimum reduziert und der zusätzliche Leistungsbedarf des Gasgebläses gering gehalten.

Um eine ausreichende Speicherwirkung der Speicherplatten und einen ausreichenden Wärmeübergang zu erreichen, weisen die Speicherplatten eine Wandstärke von 1mm bis 5mm und einen Abstand zwischen benachbarten Speicherplatten von 30 mm bis 80 mm auf.

Eine zweckentsprechende Auslegung des Wärmespeichers wird erreicht, wenn die Speicherelemente des Wärmespeichers mindestens 0,5 m² Kühlfläche pro 1 m³/s Reaktionsgasdurchsatz aufweisen. Die Kühlfläche umfasst hierbei die vom Reaktionsgas berührte Oberfläche des Wärmespeichers, insbesondere der Speicherelemente, während des Durchströmens des Reaktionsgases durch den Wärmespeicher.

Eine Entstaubungsanlage mit minimierten Investitionskosten wird erreicht, wenn zwischen dem Wärmespeicher und der Staubabscheideeinrichtung eine Eintragvorrichtung für ein Kühlgas in den Strömungskanal vorgesehen ist. Bei besonders hohem Kunststoffanteil im Schrott gelegentlich auftretende Temperaturspitzen der Reaktionsgase und besonders hohe Reaktionsgasmengen mit hohem Temperaturniveau kann durch eine zusätzliche Kühlgaseindüsung bzw. Kühlgasansaugung eine Temperaturabsenkung unmittelbar vor dem Staubabscheider erreicht werden.

Die Einhaltung einer vorgegebenen Staubfilter-Eingangstemperatur wird sichergestellt, wenn der Staubabscheideeinrichtung eingangsseitig eine Temperaturerfassungseinrichtung zugeordnet ist, die mit einem Regler zur Regelung der Eintragvorrichtung für das Kühlgas signaltechnisch verbunden ist.

Die erfindungsgemäße Entstaubungsanlage wird vorzugsweise bei metallurgischen Gefäßen, wie einem Konverter, Lichtbogenofen oder Kupolofen eingesetzt.

Bei einer Neuauslegung einer Entstaubungsanlage oder einer Erzeugungsanlage für Flüssigmetall mit einer Entstaubungsanlage ergeben sich durch die Anwendung des erfindungsgemäßen Wärmespeichers folgende Vorteile:
- Die gesamte Entstaubungsanlage kann kleiner ausgelegt werden, da nur wenig oder keine Kühlluft benötigt wird, um die Reaktionsgase vor der Staubabscheideeinrichtung auf eine für die Staubabscheideeinrichtung zulässige Temperatur abzusenken.
- Speziell bei metallurgischen Gefäßen mit einer hohen Wärmeentwickung kann das Entstaubungssystem auf eine angepasste Kapazität ausgelegt werden.

Bei einem Einbau eines erfindungsgemäßen Wärmespeichers in eine bestehende Erzeugungsanlage für Flüssigmetall ergeben sich folgende Vorteile:
- späteres Öffnen der Kühlluftzufuhr oder überhaupt Entfall dieser Kühlung,
- eine wesentlich größere Reaktionsgasmenge kann abgeführt und behandelt werden,
- geringere Emissionsbelastung in und außerhalb der Produktionshallen,
- ein verringertes Risiko unverbrannte Reaktionsgase anzusaugen,
- minimiertes Risiko von Explosionen durch unverbrannte Reaktionsgase in der Entstaubungsanlage.

Allgemein ergeben sich folgende Vorteile durch den erfindungsgemäßen Wärmespeicher in der Sekundärentstaubungsanlage:
- der Wärmespeicher benötigt keine zusätzlichen Kühlmedien für seinen Betrieb und damit keine Zusatzausrüstungen hierfür,
- der Instandhaltungsaufwand für den Wärmespeicher ist minimal, da nahezu keine Staubablagerungen auftreten,
- der Wärmespeicher benötigt lediglich 7 bis 10% des Druckverlustes der Sekundärentstaubungsanlage. Dieser zusätzliche Energiebedarf an Gebläseantriebsleistung wird durch den geringeren Gasanfall (keine oder wenig Kühlluft) kompensiert oder mehr als kompensiert.

Weitere Vorteile und Merkmale der vorliegenden Erfindung ergeben sich aus der nachfolgenden Beschreibung nicht einschränkender Ausführungsbeispiele, wobei auf die beigefügten Figuren Bezug genommen wird, die folgendes zeigen:
- Fig. 1:: eine erfindungsgemäße Sekundärentstaubungsanlage in Verbindung mit einem Lichtbogenofen,
- Fig. 2:: eine erfindungsgemäße Sekundärentstaubungsanlage in Verbindung mit einem Konverter,
- Fig. 3:: ein Längsschnitt durch den Wärmespeicher einer Sekundärentstaubungsanlage mit modularem Aufbau gemäß den Fig. 1 und 2,
- Fig. 4: ein Querschnitt durch einen Modul eines Wärmespeichers gemäß Schnittlinie A-A in Fig. 3.

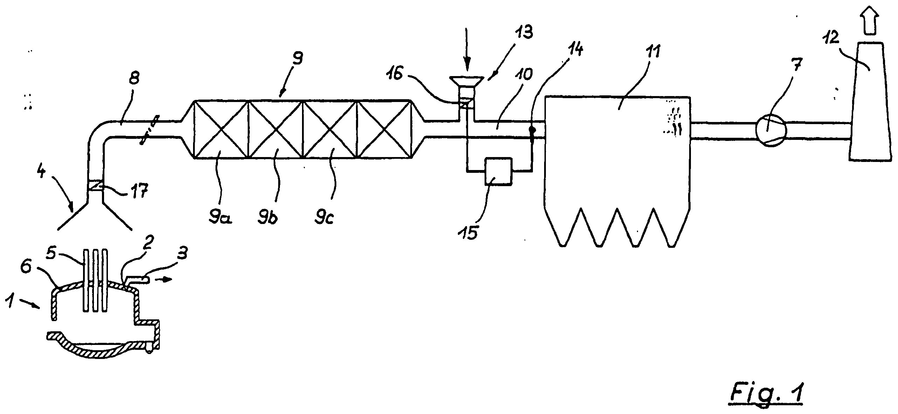

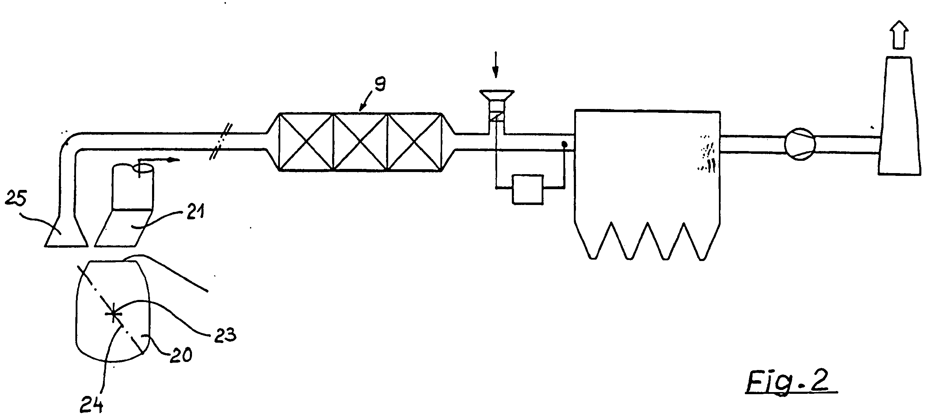

In den Figuren 1 und 2 sind anhand von zwei für die stahlerzeugende Grundstoffindustrie typischen Anwendungsfällen die erfindungsgemäßen Sekundärentstaubungsanlagen schematisch dargestellt.

Fig. 1 zeigt einen Elektrolichtbogenofen 1, wie er zum Einschmelzen von Stahlschrott üblicherweise eingesetzt wird. Dieser Elektroofen weist ein Deckelloch 2 auf, an welches dichtend ein Strömungskanal 3 anschließt, der Teil einer nicht näher dargestellten und dem bekannten Stand der Technik entsprechenden Primärentstaubungsanlage ist. Durch den Strömungskanal 3 werden während des kontinuierlichen Einschmelzprozesses und der nachfolgenden Stahlbehandlungsprozesse Reaktionsgase aus dem Inneren des Ofenraumes abgesaugt. Oberhalb des Lichtbogenofens ist unter dem Dach der nicht dargestellten Ofenhalle eine Canopy-Haube 4 zum Sammeln von Reaktionsgasen aus dem Elektroofen, die insbesondere während des Chargiervorganges von Schrott in eine Flüssigstahlvorlage durch Verbrennen von Verunreinigungen des Schrotts entstehen, angeordnet. Während des Chargiervorganges sind die Elektroden 5 und der Ofendeckel 6 aus der dargestellten Betriebsposition des Elektroofens ausgeschwenkt und die Reaktionsgase können direkt zur Canopy-Haube aufsteigen. Die in der Canopy-Haube 4 gesammelten Reaktionsgase werden unter der Sogwirkung eines Gebläses 7 durch den Strömungskanal 8 in und durch einen Wärmespeicher 9 gesaugt, in dem den Reaktionsgasen bei hoher Reaktionsgastemperatur Wärme entzogen wird. Der Wärmespeicher 9 ist von mehreren in Reihe geschaltenen Speichermodulen 9a, 9b, 9c, 9d gebildet. Anschließend werden die auf etwa Staubfilter-Eintrittstemperatur abgekühlten Reaktionsgase durch den Strömungskanal 10 in eine Staubabscheideeinrichtung 11 gesaugt, der als mehrstufiger Staubfilter ausgebildet ist und in dem eine weitgehende Abscheidung des Staubes aus dem Reaktionsgas erfolgt. Anschließend wird dieses weitgehend gereinigte Reaktionsgas vom Gebläse 7 über den Kamin 12 in die Umgebung abgeleitet.

Vor der Staubabscheideeinrichtung 11 mündet eine Eintragvorrichtung 13 für Kühlluft in den Strömungskanal 10, die so ausgebildet ist, dass entlang der verbleibenden Wegstrecke zur Staubabscheideeinrichtung eine weitgehend gleichmäßige Durchmischung und damit Kühlung des Reaktionsgases erfolgen kann. Damit kann Reaktionsgas mit Spitzenwerten hinsichtlich Reaktionsgasmenge und Reaktionsgastemperatur für die Staubabscheideeinrichtung verarbeitbar vorbereitet werden. Zur Optimierung der Kühlluftzuführung ist eintrittsseitig der Staubabscheideeinrichtung 11 eine Temperaturerfassungseinrichtung 14 im Strömungskanal 10 angeordnet, deren Messsignal in einem Regler 15 zu Steuerung der einzudüsenden Kühlluftmenge in der Eintragvorrichtung 13 für Kühlluft herangezogen wird. Mit einer Verschlussklappe 16 kann der Kühlluftstrom beispielsweise mengengeregelt werden.

Es ist vorteilhaft, wenn der Wärmespeicher 9 möglichst knapp vor der Staubabscheidevorrichtung 11 und möglichst weit entfernt von der Canopy-Haube 4 angeordnet ist, da über einen langen Strömungskanal 8 erhebliche Wärmemengen durch die Wand des Strömungskanales an die Umgebungsluft abgegeben werden können und damit die Reaktionsgase bereits mit abgesenkter Temperatur in den Wärmespeicher 9 eintreten.

Mit einer Steuerklappe 17 im Strömungskanal 8, knapp oberhalb der Canopy-Haube, wird die Ansaugmenge der Sekundärentstaubungsanlage gesteuert.

Fig. 2 zeigt einen zweiten Anwendungsfall einer Sekundärentstaubungsanlage der erfindungsgemäßen Art bei einem kippbaren Blasekonverter in einem Blasstahlwerk. Während des kontinuierlichen Erzeugungsprozesses ist der Konverter 20 in der dargestellten aufrechten Position und eine gekühlte Absaughaube 21 mit geringem Abstand zur Konvertermündung 22 über dieser angeordnet, die Teil einer Primärentstaubungsanlage ist. Der Konverter 20 ist um die Kippachse 23 in die durch eine strichpunktierte Linie 24 angedeutete gekippte Position verschwenkbar, in der die Schrottchargierung vorgenommen wird. Die in dieser Lage bei der Schrottchargierung verstärkt austretenden Reaktionsgase werden von einer Absaughaube 25 aufgefangen und in einer Sekundärentstaubungsanlage weiter behandelt. Diese Sekundärentstaubungsanlage entspricht in ihrem strukturellen Aufbau der in Fig. 1 dargestellten und beschriebenen Entstaubungseinrichtung.

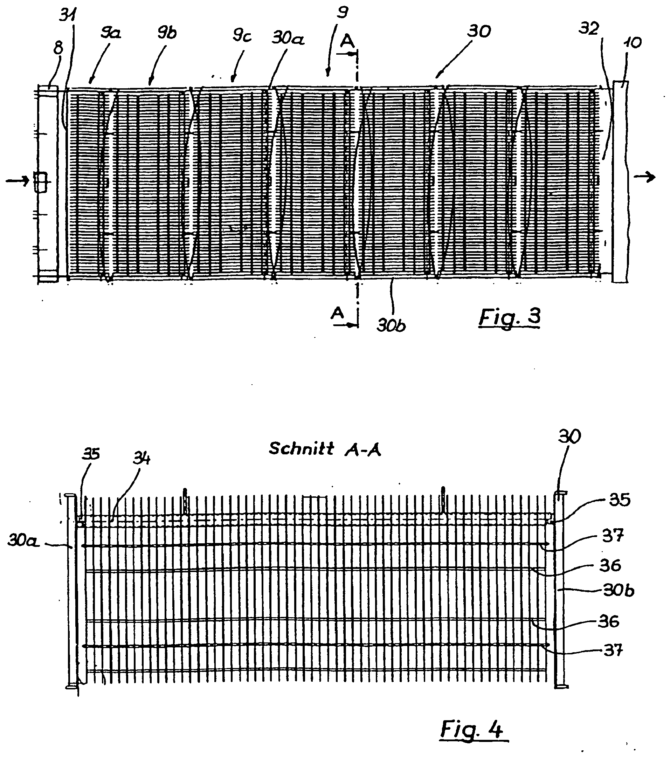

In den Figuren 3 und 4 sind konstruktive Details des Wärmespeichers dargestellt. Der Wärmespeicher 9 umfasst ein in die Strömungskanäle 8, 10 eingebundenes Gehäuse 30, von welchem zwei Seitenwände 30a, 30b dargestellt sind und welches eine Eintrittsöffnung 31 und einer Austrittsöffnung 32 für den Durchtritt des Reaktionsgasstromes aufweist. Der Reaktionsgasstrom durchströmt den Wärmespeicher auf kurzem Weg mit minimalem Widerstand ohne Richtungsänderung. In das Gehäuse 30 sind aus einer Vielzahl von Speicherelementen aufgebaute einzelne Speichermodule 9a, 9b, 9c, .. eingesetzt, die über einen Tragbalken 34 auf Traglaschen 35 des Gehäuses aufliegen. Die Speicherelemente bestehen aus Metallplatten, vorzugsweise aus dünnen Blechtafeln, die mit angeschweißten Abstandshaltern 36 in vorbestimmten Abstand zueinander festgelegt und mit durchgehenden Zugstäben 37 zu einem Modul verspannt sind. Die Blechtafeln sind 2 mm dick und in einem Abstand von 60 mm zueinander angeordnet.

## Patentansprüche

1. Verfahren zum Betrieb einer Entstaubungsanlage gemäß Anspruch 9 zum Sammeln und Behandeln von Reaktionsgasen aus einer Erzeugungsanlage für schmelzflüssige Metalle, wobei metallhaltige Einsatzstoffe in fester oder flüssiger Form in ein metallurgisches Gefäß eingebracht und unter Einwirkung von Brennstoffen und Reaktionsstoffen umgesetzt werden und die das metallurgische Gefäß verlassenden heißen, gasförmigen und staubbeladenen Reaktionsgase teilweise einem Primärentstaubungsprozess und teilweise einem Sekundärentstaubungsprozess in zugeordneten Staubabscheideeinrichtungen (11) zugeführt werden, **dadurch gekennzeichnet, dass** die dem Sekundärentstaubungsprozess zugeführten Reaktionsgase vor dem Sekundärentstaubungsprozess einen Wärmespeicher (9) durchströmen und von Reaktionsgasen mit einer Reaktionsgas-Temperatur, die über der Wandtemperatur der Speicherelemente aus Metall liegt, Wärme an den Wärmespeicher abgegeben wird und diese gespeicherte Wärme an nachfolgende Reaktionsgase mit einer Reaktionsgas-Temperatur, die unter der Wandtemperatur der Speicherelemente aus Metall liegt, wieder abgegeben wird.

2. Verfahren nach Anspruch 1, **dadurch gekennzeichnet, dass** 20% bis 70%, vorzugsweise 25% bis 50%, der von den Reaktionsgasen transportierten Wärmemenge im Wärmespeicher gespeichert und von ihm nachfolgend wieder abgegeben wird.

3. Verfahren nach Anspruch 1 oder 2, **dadurch gekennzeichnet, dass** durch die von den Reaktionsgasen an die Speicherelemente abgegebene Wärme die Temperatur der Reaktionsgase auf eine Staubfilter-Eingangstemperatur von vorzugsweise weniger als 180°C abgesenkt wird.

4. Verfahren nach einem der vorhergehenden Ansprüche, **dadurch gekennzeichnet, dass** den Reaktionsgasen nach dem Durchströmen des Wärmespeichers und vor dem Eintritt in die Staubabscheideeinrichtung ein Kühlgas zugeführt und die Temperatur der Reaktionsgase auf eine Staubfilter-Eingangstemperatur von vorzugsweise weniger als 180°C abgesenkt wird.

5. Verfahren nach einem der vorhergehenden Ansprüche, **dadurch gekennzeichnet,** das die Reaktionsgase auf eine Staubfilter-Eingangstemperatur in einem Temperaturbereich zwischen 130°C und 160°C abgesenkt werden.

6. Verfahren nach einem der Ansprüche 4 oder 5, **dadurch gekennzeichnet, dass** der Istwert der Staubfilter-Eingangstemperatur kontinuierlich gemessen wird und die Menge des dem Reaktionsgas zugemischten Kühlgasen in Abhängigkeit davon geregelt wird.

7. Verfahren nach einem der Ansprüche 4 bis 6, **dadurch gekennzeichnet, dass** als Kühlgas Kühlluft eingesetzt wird.

8. Verfahren nach Anspruch 1, **dadurch gekennzeichnet, dass** die Speicherelemente (33) des Wärmespeichers (9) mindestens 0,5 m² Kühlfläche pro 1 m³/s Reaktionsgasdurchsatz aufweisen.

9. Entstaubungsanlage zum Sammeln und Behandeln von Reaktionsgasen aus einer Erzeugungsanlage für schmelzflüssige Metalle, wobei die Erzeugungsanlage ein metallurgisches Gefäß für die Aufnahme metallhaltiger Einsatzstoffe in fester oder flüssiger Form und deren Umsetzung unter Einwirkung von Brennstoffen und Reaktionsstoffen umfasst und dem metallurgischen Gefäß eine Primärentstaubungsanlage und einer Sekundärentstaubungsanlage für die das metallurgische Gefäß verlassenden heißen, gasförmigen und staubbeladenen Reaktionsgase zugeordnet sind, die mindestens eine Absaughaube (4, 25), einen Strömungskanal (8, 10) und eine Staubabscheideeinrichtung (11) umfassen, **dadurch gekennzeichnet, dass** im Strömungskanal (8, 10) der Sekundärentstaubungsanlage ein Wärmespeicher (9) zur Aufnahme von Wärme aus dem durchströmenden Reaktionsgas und zur Abgabe von Wärme an das durchströmende Reaktionsgas angeordnet ist,
wobei der Wärmespeicher (9) Speicherelemente aus Metall aufweist, und wobei die Speicherelemente des Wärmespeichers (9) von parallel zueinander angeordneten Speicherplatten gebildet sind,
und zwischen benachbarten Speicherelementen Strömungskanäle angeordnet sind

10. Entstaubungseinrichtung nach Anspruch 9, **dadurch gekennzeichnet, dass** die Speicherplatten eine Wandstärke von 1 bis 5 mm aufweisen und der Abstand benachbarter Speicherplatten 30 bis 80 mm beträgt.

11. Entstaubungsanlage nach einem der Ansprüche 9 bis 10, **dadurch gekennzeichnet, dass** zwischen dem Wärmespeicher (9) und der Staubabscheideeinrichtung (11) eine Eintragvorrichtung (13) für ein Kühlgas in den Strömungskanal (10) vorgesehen ist.

12. Entstaubungsanlage nach Anspruch 11, **dadurch gekennzeichnet, dass** der Staubabscheideeinrichtung (11) eingangsseitig eine Temperaturerfassungseinrichtung (14) zugeordnet ist, die mit einem Regler (15) zur Regelung der Eintragvorrichtung (13) für das Kühlgas signaltechnisch verbunden ist.

13. Entstaubungsanlage nach einem der Ansprüche 9 bis 12, **dadurch gekennzeichnet, dass** die Sekundärentstaubungsanlage einem metallurgischen Gefäß zugeordnet ist, welches von einem Konverter (20), Lichtbogenofen (1) oder Kupolofen für die Stahlerzeugung gebildet ist.

## Claims

1. Process for operating a dedusting installation according to Claim 9 for collecting and treating reaction gases from a production plant for molten metals, in which metal-containing feed materials in solid or liquid form are introduced into a metallurgical vessel and reacted under the action of fuels and reaction materials, and the hot, gaseous and dust-laden reaction gases which leave the metallurgical vessel are fed in part to a primary dedusting process and in part to a secondary dedusting process in associated dust separation devices (11), **characterized in that** the reaction gases which are fed to the secondary dedusting process flow through a heat accumulator (9) prior to the secondary dedusting process, and heat is released from reaction gases at a reaction gas temperature which is above the wall temperature of the metal accumulator elements to the heat accumulator, and this accumulated heat is released again to subsequent reaction gases at a reaction gas temperature which is below the wall temperature of the metal accumulator elements.

2. Process according to Claim 1, **characterized in that** 20% to 70%, preferably 25% to 50%, of the heat quantity transported by the reaction gases is accumulated in the heat accumulator and subsequently released again by the latter.

3. Process according to Claim 1 or 2, **characterized in that** the heat released from the reaction gases to the accumulator elements is used to lower the temperature of the reaction gases to a dust filter inlet temperature of preferably less than 180°C.

4. Process according to one of the preceding claims, **characterized in that** a cooling gas is fed to the reaction gases after they have flowed through the heat accumulator and before they enter the dust separation device, and the temperature of the reaction gases is lowered to a dust filter inlet temperature of preferably less than 180°C.

5. Process according to one of the preceding claims, **characterized in that** the reaction gases are lowered to a dust filter inlet temperature in a temperature range between 130°C and 160°C.

6. Process according to either of Claims 4 and 5, **characterized in that** the actual value of the dust filter inlet temperature is measured continuously, and the quantity of cooling gases admixed to the reaction gas is controlled as a function thereof.

7. Process according to one of Claims 4 to 6, **characterized in that** the cooling gas used is cooling air.

8. Process according to Claim 1, **characterized in that** the accumulator elements (33) of the heat accumulator (9) have at least 0.5 m² of cooling surface area per 1 m³/s of reaction gas throughput.

9. Dedusting installation for collecting and treating reaction gases from a production plant for molten metals, the production plant comprising a metallurgical vessel for receiving metal-containing feed materials in solid or liquid form and reacting them under the action of fuels and reaction materials, and the metallurgical vessel being assigned a primary dedusting installation and a secondary dedusting installation for the hot, gaseous and dust-laden reaction gases leaving the metallurgical vessel, which dedusting installations at least comprise an extractor hood (4, 25), a flow passage (8, 10) and a dust separation device (11), **characterized in that** a heat accumulator (9) for taking up heat from the reaction gas flowing through it and for releasing heat to the reaction gas flowing through it is arranged in the flow passage (8, 10) of the secondary dedusting installation, the heat accumulator (9) having metal accumulator elements, and the accumulator elements of the heat accumulator (9) being formed by accumulator plates that are arranged parallel to one another, and flow passages being arranged between adjacent accumulator elements; and the accumulator plates being fixed at a predetermined distance from one another by welded-on spacers (36) and clamped using continuous tensioning rods (37) to form a module.

10. Dedusting device according to Claim 9, **characterized in that** the accumulator plates have a wall thickness of from 1 to 5 mm, and the distance between adjacent accumulator plates is from 30 to 80 mm.

11. Dedusting installation according to either of Claims 9 and 10, **characterized in that** an introduction apparatus (13) for introducing a cooling gas into the flow passage (10) is provided between the heat accumulator (9) and the dust separation device (11).

12. Dedusting installation according to Claim 11, **characterized in that** on the inlet side the dust separation device (11) is assigned a temperature-recording device (14), which is signal-connected to a controller (15) for controlling the introduction apparatus (13) for introducing the cooling gas.

13. Dedusting installation according to one of Claims 9 to 12, **characterized in that** the secondary dedusting installation is assigned to a metallurgical vessel which is formed by a converter (20), an arc furnace (1) or a cupola furnace for steelmaking.

## Revendications

1. Procédé d'exploitation d'une installation de dépoussiérage selon la revendication 9 pour collecter et traiter des gaz réactionnels issus d'une installation de production pour métaux en fusion, des matériaux d'insertion contenant du métal étant introduits sous forme solide ou liquide dans un récipient métallurgique et convertis sous l'effet de combustibles et de matières réactionnelles, et les gaz réactionnels chauds, gazeux et chargés de poussières qui quittent le récipient métallurgique alimentant en partie un processus de dépoussiérage primaire et en partie un processus de dépoussiérage secondaire dans des dispositifs de dépôt de poussière (11) associés, **caractérisé en ce que** les gaz réactionnels qui alimentent le processus de dépoussiérage secondaire traversent un accumulateur thermique (9) avant le processus de dépoussiérage secondaire et **en ce que** de la chaleur provenant des gaz réactionnels qui ont une température de gaz réactionnel supérieure à la température de paroi des éléments d'accumulateur en métal est fournie à l'accumulateur thermique, et cette chaleur accumulée est restituée à des gaz réactionnels suivants ayant une température de gaz réactionnel qui est inférieure à la température de paroi des éléments d'accumulateur en métal.

2. Procédé selon la revendication 1, **caractérisé en ce que** 20% à 70%, de préférence 25% à 50%, de la quantité de chaleur transportée par les gaz réactionnels est accumulée dans l'accumulateur thermique et encore restituée ensuite par celui-ci.

3. Procédé selon la revendication 1 ou 2, **caractérisé en ce que**, grâce à la chaleur fournie aux éléments d'accumulateur par les gaz réactionnels, la température des gaz réactionnels est abaissée à une température d'entrée pour filtre anti-poussières de préférence inférieure à 180°C.

4. Procédé selon l'une des revendications précédentes, **caractérisé en ce qu'**un gaz de refroidissement est amené aux gaz réactionnels après la traversée de l'accumulateur thermique et avant l'entrée dans le dispositif de dépôt de poussières et la température des gaz réactionnels est abaissée à une température d'entrée pour filtre anti-poussières de préférence inférieure à 180°C.

5. Procédé selon l'une des revendications précédentes, **caractérisé en ce que** les gaz réactionnels sont abaissés à une température d'entrée pour filtre anti-poussières dans un domaine de température entre 130°C et 160°C.

6. Procédé selon l'une des revendications 4 ou 5, **caractérisé en ce que** la valeur réelle de la température d'entrée pour filtre anti-poussières est mesurée en continu et la quantité de gaz de refroidissement mélangé au gaz réactionnel est réglée en fonction de cette température.

7. Procédé selon l'une des revendications 4 à 6, **caractérisé en ce que** de l'air de refroidissement est utilisé en tant que gaz de refroidissement.

8. Procédé selon la revendication 1, **caractérisé en ce que** les éléments d'accumulateur (33) de l'accumulateur thermique (9) présentent au moins 0,5 m² de surface de refroidissement pour 1 m³/s de débit de gaz réactionnels.

9. Installation de dépoussiérage pour la collecte et le traitement de gaz réactionnels issus d'une installation de production pour métaux en fusion, l'installation de production comprenant un récipient métallurgique pour la réception de matériaux d'insertion contenant du métal sous forme solide ou liquide et leur conversion sous l'effet de combustibles et de matières réactionnelles, et une installation de dépoussiérage primaire et une installation de dépoussiérage secondaire pour les gaz réactionnels chauds, gazeux et chargés de poussières qui quittent le récipient métallurgique étant associées au récipient métallurgique, lesquelles installations comprennent au moins une hotte d'aspiration (4, 25), un canal d'écoulement (8, 10) et un dispositif de dépôt de poussières (11), **caractérisée en ce qu'**un accumulateur thermique (9) destiné à absorber de la chaleur du gaz réactionnel circulant et à fournir de la chaleur au gaz réactionnel circulant est situé dans le canal d'écoulement (8, 9) de l'installation de dépoussiérage secondaire, l'accumulateur thermique (9) comprenant des éléments d'accumulateur en métal et les éléments d'accumulateur de l'accumulateur thermique (9) étant formés par des plaques d'accumulateur disposées parallèlement les unes aux autres, et des canaux d'écoulement étant situés entre des éléments d'accumulateur contigus ; et les plaques d'accumulateur étant fixées à une distance prédéterminée les unes des autres au moyen d'espaceurs (36) soudés et étant mises en contrainte, formant ainsi un module, au moyen de tirants (37) traversants.

10. Installation de dépoussiérage selon la revendication 9, **caractérisée en ce que** les plaques d'accumulateur ont une épaisseur de paroi comprise entre 1 mm et 5 mm et la distance entre des plaques d'accumulateur contiguës est comprise entre 30 mm et 80 mm.

11. Installation de dépoussiérage selon l'une des revendications 9 à 10, **caractérisée en ce qu'**un dispositif d'alimentation (13) pour un gaz de refroidissement est prévu dans le canal d'écoulement (10), entre l'accumulateur thermique (9) et le dispositif de dépôt de poussières (11).

12. Installation de dépoussiérage selon la revendication 11, **caractérisée en ce qu'**un dispositif de saisie de température (14), qui est relié par signaux à un régulateur (15) permettant le réglage du dispositif d'alimentation (13) pour le gaz de refroidissement, est associé au dispositif de dépôt de poussières (11) sur le côté d'entrée.

13. Installation de dépoussiérage selon l'une des revendications 9 à 12, **caractérisée en ce que** l'installation de dépoussiérage secondaire est associée à un récipient métallurgique qui est formé par un convertisseur (20), un four à arc (1) ou un cubilot pour la production d'acier.
